# EUROPEAN PATENT APPLICATION

(11) **EP 1 195 480 A2**
(43) Date of publication of application: **10.04.2002**
(21) Application number: 01203638.0
(22) Date of filing: 24.09.2001
(51) Int. Cl.: E04H 6/00, B62H 3/12

(54) **Method for storing and taking out of goods in a storage system, as well as storage system and lifting mechanism**

(30) Priority: 25.09.2000 NL 1016264; 18.06.2001 NL 1018317
(71) Applicant: Kooymans Beheer B.V., 5616 JC Eindhoven (NL)
(72) Inventor: Kooijmans, Antonius Gerardus Petrus Johannes, 5616 JC Eindhoven (NL)
(74) Representative: Verhees, Godefridus Josephus Maria

(57) **Abstract**

A storage system 1 has a structural frame 3 in which goods 5 are stored next to each other in rows 7 and above each other on two levels 9, 11. There are corridors 13 between the rows 7. The structural frame 3 is provided with a means of guiding 15, situated above in the structural frame 3, and units 17 which move along the means of guiding and are built up of conveyance elements, which can be moved along the means of guiding 15, and a means of hanging on which the goods 5 are hung. The units 17 which move along the means of guiding 15 can be moved between a storage position 25 and a removal position 26, in which the goods 5 are in the corridor 13.

In order to limit the built-in space the goods 5 can be turned with respect to the movable units 17 in and/or on the way to the removal position.

## Description

### BACKGROUND OF THE INVENTION:

### Field of the invention

The invention relates to a method for storing and removing goods, particularly bicycles, in a storage system in which the goods when in the storage position are in at least one row next to each other and are hung at a distance above a floor on a means of hanging and in which the goods in the placement and removal position are practically on the floor outside the row, in which when put in storage the goods are attached to the means of hanging outside the row, after which the goods are raised and moved into the row, and in which when being removed, the goods are moved from the storage position to outside the row and lowered practically to the floor, after which the goods are detached from the means of hanging. The invention also relates to a storage system comprising a means of guiding and a unit that can be moved along the means of guiding, comprising a conveyance element to be guided along the means of guiding, a means of hanging on which the goods can be hung and a lifting mechanism for lifting and lowering the goods, and in which the movable unit can be moved along the means of guiding between the storage position and the removal position. In particular the invention relates to a bicycle shed.

### Prior art

A similar storage system is generally known in the design of a bicycle shed in which bicycles are in rows next to each other and on two levels one above the other. The bicycles on the highest level are hung by means of bicycle lifts which can move along straight guides. The guides cross a corridor between the rows of bicycles. In order to be able to remove the bicycles on the highest level from the storage area, the bicycles can be pulled into the corridor via the guides and in this position lowered with the lift. During the removal of these bicycles the corridor is obstructed.

### Summary of the invention

An objective of the invention is to provide a method and a storage system of the type described in the preamble in which when removing goods from the highest level the corridor will not be obstructed or at least as briefly as possible. For this purpose the method according to the invention is characterized in that when being put in storage the goods are placed in the placement position, in which the position of the goods is practically perpendicular to the position in the storage position, and that after attaching the goods to the means of hanging and before reaching the storage position, the goods are turned on an imaginary vertical axis from the position in the placement position to a position parallel to the position of the goods in the storage position, and that when removing the goods before detaching them from the means of hanging and after moving the goods from the storage position, the goods are turned on an imaginary vertical axis from a position parallel to the position of the goods in the storage position to the removal position, which is practically perpendicular to the position of the goods in the storage position. When the goods are in the storage position, bicycles in particular, they are transverse to the corridor's longitudinal direction. Because the means of hanging in the removal position is at an angle, preferably at right angles to the means of hanging in the storage position, the corridor is not or at least only partially obstructed by the goods in the removal position.

Turning the goods takes place preferably by providing the means of hanging, on which the goods are hung, with at least two cables and by twisting these cables or by moving the goods along a curved rail or by rotating the means of hanging on an imaginary vertical axis.

As to the storage system the invention is characterized in that the means of hanging comprises at least two elements for hanging situated at a distance from each other, for example cables, in which the distance between these elements is less than 50 cm, preferably approximately 25 cm. If the distance between the cables is small, the cables will simply be able to be twisted 90 degrees and while being twisted the goods will only be lifted up a little as a result of which only a small amount of force is needed for the twisting.

Another embodiment of the storage system according to the invention is characterized in that the means of hanging can be turned with respect to the conveyance element when in the removal position and/or between the removal position and the storage position. Because of the two designs mentioned above the means of guiding only has to run just to the removal position as a result of which it is relatively short, demanding less space. In addition, turning the goods does not require any extra time because turning can take place while moving or while lowering the goods.

Yet another embodiment of the storage system according to the invention is characterized in that the means of guiding comprises rail elements which extend from the storage position to the removal position, in which a first part of the rail elements extending above the storage position is practically perpendicular to a second part of the rail elements, which extends above the removal position.

A further objective of the invention is to limit the required height of the storage system. For this purpose, an embodiment of the storage system according to the invention is characterized in that the means of guiding comprises rail elements, in which the conveyance element is situated between two rail elements and is guided on both sides by these rail elements, and in which a number of rail elements guide a conveyance element on both sides. By placing the guide elements between the rail elements instead of under them the required height is smaller.

It is noted that the design in which the means of guiding is situated between the rail elements can also be applied independently of the embodiments described above, through which the possibility expressly is kept open to claim this embodiment independently.

Still a further embodiment of the storage system is characterized in that the storage system is a bicycle shed and there is an attaching device on the element for hanging for attaching to a bicycle, which attaching device comprises two elements, which can move with respect to each other against a force, for example a spring force, each of which is provided with an attaching element at the free end for attaching to a part of a bicycle. With the help of this attaching device any bicycle can be attached simply to the cables, irrespective of the bicycle's dimensions. The attaching elements can be executed as hooks for attaching to a bicycle's handlebars or steering tube, saddle pin or seat tube respectively. The moving elements are, for example, a tube and a rod which can move in the tube telescopically.

In order to prevent the elements for hanging from shooting upwards when the goods are detached from them, an embodiment is characterized in that the storage system has a safety mechanism which brakes the winding of the element for hanging, when there is no weight on this element. The safety mechanism preferably comprises a means of detection for detecting goods on the element for hanging, which means is situated in the attaching device and when the elements are slid apart winding of the element for hanging is released and when slid together the winding force is restricted.

A practical and favourable embodiment of the storage system according to the invention is characterized in that the storage system is a bicycle shed and comprises vertical slots for inserting a bicycle wheel, these slots being formed by two parallel bars the ends of which pass through holes in connecting elements, which bars have been pinched flat at or near at least one of the free ends in such a way that the dimension of the flattened part's cross-section is greater than that of the holes in the constructional elements. Preferably the two parallel bars are part of one U-shaped bar. By a bar may be meant a solid bar or a tube.

It is also noted here that the design of bars pinched flat passing through constructional elements can also be applied independently of the design mentioned above, through which the possibility expressly is kept open to claim independently the above embodiment with pinched-flat bars.

The storage system according to the invention can be executed advantageously as a bicycle shed, in which the goods are bicycles which are next to each other in rows and on at least two levels one above the other in the storage system, in which between a number of rows there are corridors, in which the means of guiding is fitted above in the structural frame and the goods are hung on units which move along the means of guiding on the highest level, and in which when in the removal position the goods are in the corridors.

The invention also relates to a lifting mechanism for application to the storage system. As to the lifting mechanism the invention is characterized in that the lifting mechanism comprises at least one winding drum for winding and unwinding an element for hanging, for example a cable, which winding drum can rotate freely on a fixed shaft, which lifting mechanism further comprises a least one winding spring, one end of which is fastened to the winding drum and the other end of which is fastened to the fixed shaft, which lifting mechanism further comprises a rotating main shaft which is coupled to a main spring, which main shaft can be coupled to the winding drum and can be blocked to prevent it from rotating, and which lifting mechanism further comprises a command mechanism for coupling and uncoupling the winding drum to the main shaft and for blocking and releasing the main shaft. Such a lifting mechanism, with a winding spring constantly coupled to the winding drum and with a main spring which can be coupled to the winding drum, has the advantage that through the coupling of the main spring an extra winding force is exerted on the winding drum for lifting a load, while when the main spring is uncoupled only a small amount of winding force is exerted on the winding drum for winding the element for hanging.

It is noted that applicability of the lifting mechanism according to the invention is not limited to the methods and storage systems described here, but that the lifting mechanism is also applicable to other methods and storage systems, through which here the possibility expressly is kept open to protect the lifting mechanism independently.

The lifting mechanism preferably has two winding drums for winding and unwinding two elements for hanging, each of which can rotate on a separate fixed shaft.

An embodiment of the lifting mechanism is characterized in that the main shaft is coupled to the main spring by means of a transmission, which has a different transmission ratio in the two opposite directions of rotation. By choosing the correct transmission ratio, in which while lifting a load the main spring is coupled to the main shaft through a greater transmission than during unwinding of the main spring when lowering a load, it is possible to guarantee that the main spring will always be fully wound.

A further embodiment of the lifting mechanism is characterized in that the transmission comprises a large gear wheel fixed to the main shaft as well as a first and second small gear wheel which mesh with the large gear wheel and which have a different number of teeth, which first and second gear wheel are situated on a first and second auxiliary shaft, in which there is an additional small gear wheel on each auxiliary shaft, which additional small gear wheels mesh with each other, in which the main spring at one end is fastened to one of the auxiliary shafts, and in which one of the small gear wheels mentioned above can rotate freely in one direction of rotation with respect to the auxiliary shaft concerned and is blocked in the opposite direction of rotation with respect to the auxiliary shaft concerned and an additional small gear wheel of the small gear wheels mentioned above is blocked in the direction of rotation mentioned with respect to the auxiliary shaft concerned and can rotate freely in the opposite direction of rotation with respect to the auxiliary shaft concerned.

In order to prevent the elements for hanging from winding or unwinding too fast, a further embodiment of the lifting mechanism is characterized in that the lifting mechanism also comprises at least one rotation damper coupled to the winding drum.

Still a further embodiment of the lifting mechanism is characterized in that the command mechanism comprises a command shaft on which two vanes are fastened as well as a blocking pawl and a switching pawl, which switching pawl falls into a notch when the main spring is wound up and the command shaft rotates, in which first the blocking pawl blocks the large gear wheel to prevent it from rotating and then the vanes uncouple the winding drums from the main shaft, and which command mechanism further comprises a means for rotating the command shaft in the opposite direction, in which first the winding drums are coupled to the main shaft and after that the main shaft is released.

Finally, one last favourable embodiment of the lifting mechanism is characterized in that the above-mentioned means for rotating the command shaft is blocked if the telescopic elements of the storage system's attaching device with respect to each other have slid inwards maximally, indicating that no load is attached to the attaching device. Therefore, if there is not a bicycle attached to the attaching device, the main spring is blocked and only the winding springs on the attaching device work. Because of this only a small amount of force is exerted on the device preventing it from being pulled upwards with much force and speed by the main spring.

### Brief description of the drawings

The invention will be elucidated more fully below on the basis of drawings in which embodiments of the storage system according to the invention are shown. In these drawings:
Figures 1 to 4 inclusive show a first embodiment of the storage system according to the invention executed as a bicycle shed during the various stages of removing a bicycle;
Figures 5 and 6 show a view from above and a view from the side respectively of the inner works of the storage system's lifting mechanism;
Figure 7 shows a cross-section of a detail of the means of guiding with the movable units of the storage system;
Figure 8 shows a part of a bicycle rack of the storage system's structural frame;
Figures 9 and 10 show a detail of a bicycle hanging on the cables by means of an attaching device in perspective and a side view respectively;
Figure 11 shows a second embodiment of the storage system according to the invention, again executed as a bicycle shed; and
Figure 12 shows a third embodiment of the storage system according to the invention, also executed as a bicycle shed.

### Detailed description of the drawings

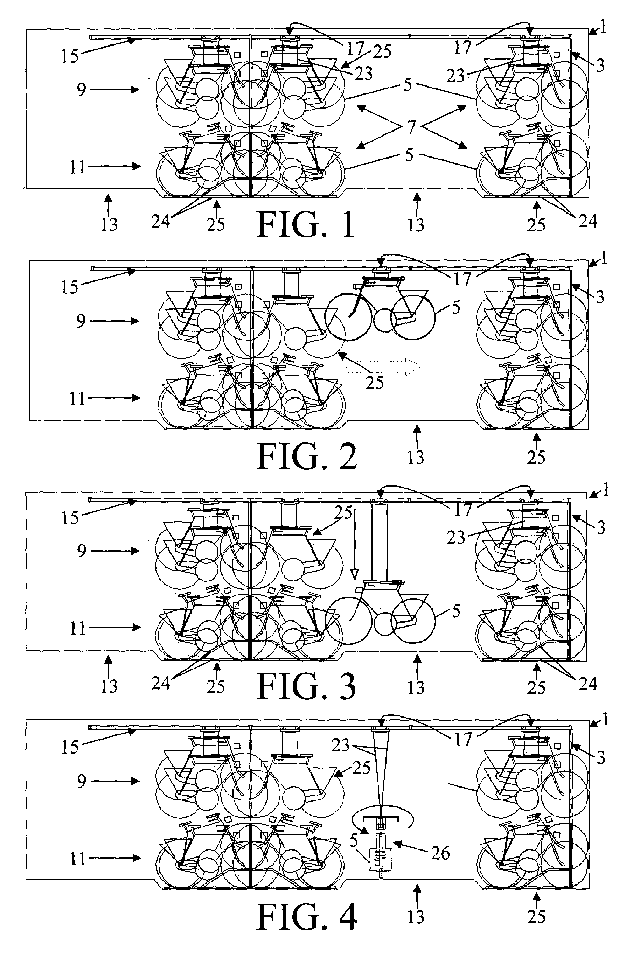

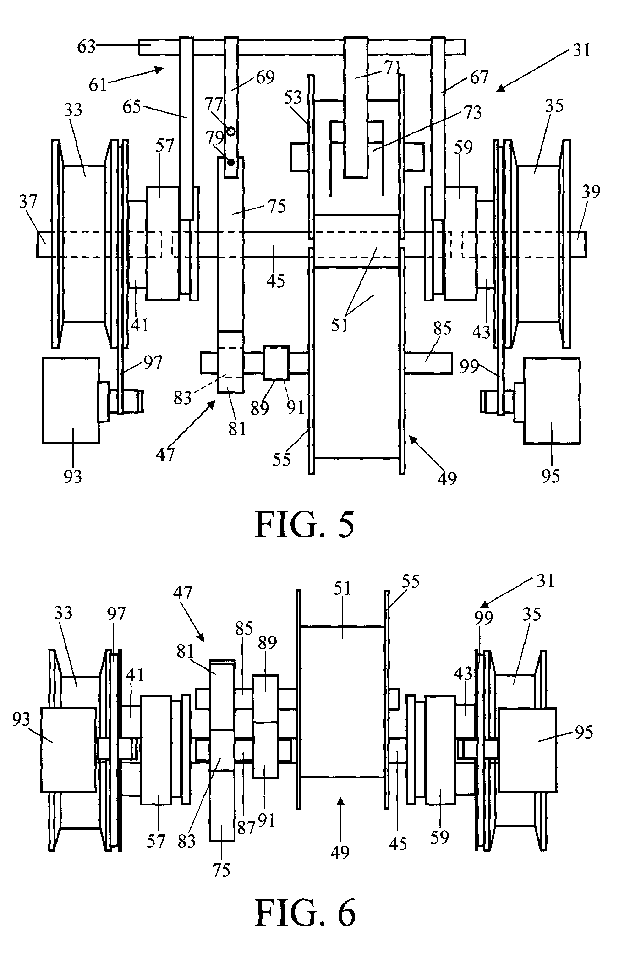

A first embodiment of the storage system according to the invention executed as a bicycle shed is shown in Figures 1 to 4 inclusive during various stages of removing a bicycle. The storage system 1 has a structural frame 3 in which bicycles 5 are stored next to each other in rows 7 and on two levels 9 and 11 one above the other. Between the rows 7 there are corridors 13. The structural frame 3 has a means of guiding 15, which is situated above in the structural frame, for guiding movable units 17 along the means of guiding, on which the bicycles 5 are hung on the highest level 9. The units 17 which move along the means of guiding are provided with a lifting mechanism (see Figures 5 and 6) for lifting the bicycles 5, each of which is hung on two elements for hanging situated at a distance from each other. The element for hanging in this embodiment has been executed as a cable 23 but may also be executed as a strap in order to hang the bicycle more stably so that it will swing and sway less. On the lowest level the wheels of the bicycles 5 are in channels 24.

The units 17 which move along the means of guiding 15 can be moved between a storage position 25, see Figure 1, in which the bicycles are stored, and a placement and removal position 26, see Figure 4, in which the bicycles are in the corridors 13 and can be brought into and out of the storage system 1 respectively. In and on the way to the placement and removal position 26, the bicycles can be turned with respect to the conveyance elements 19 by twisting the cables 23 90 degrees with respect to each other, see Figure 4.

In Figures 5 and 6 the inner works of the lifting mechanism 31 are shown in a view from above and from the side respectively. The lifting mechanism 31 has two winding drums 33 and 35 for winding and unwinding two cables 23. Each of the winding drums 33 and 35 can rotate freely on a fixed shaft 37 and 39. A winding spring 41, 43 is fastened at one end to the winding drum 33, 35 and at the other end to the fixed shaft 37, 39. Furthermore, the lifting mechanism 31 has a rotating main shaft 45, which is coupled to a main spring 49 by means of a transmission 47. The main spring 49 has been executed as a commonly known constant compression spring consisting of a metal band 51 that can be wound on two reels 53, 55, in which because of the prestress the band 51 has the tendency to wind up on the reel 53. In this embodiment the winding springs 41, 43 have been executed as spiral springs, but they may also be executed as constant compression springs, like the main spring.

The main shaft 45 can be coupled to the winding drums 33 and 35 by means of the coupling sleeves 57 and 59 which can move in an axial direction and it can be blocked to prevent it from rotating. Each coupling sleeve 57, 59 is provided with a groove in its periphery on the inner side and can move with respect to a short tube fastened to the winding drum 33, 35. This tube is situated between the winding drum 33, 35 and the main shaft 45 and is provided with holes in which there are balls. The balls are also situated partially in the groove. By moving the coupling sleeve the balls are pushed out of the groove in a radial direction and end up in notches in the main shaft, while, in addition, they are still situated in the holes in the tube connected to the winding drum. In this way the main shaft 45 is coupled to the winding drum 33, 35 through the balls and the tube.

Furthermore, the lifting mechanism 31 has a command mechanism 61 for coupling and uncoupling the winding drums 33, 35 to the main shaft 45 and for blocking and releasing the main shaft 45. The command mechanism 61 has a command shaft 63 on which two vanes 65 and 67 are fastened as well as a blocking pawl 69 and a switching pawl 71. When the band 51 is fully wound up on the reel 55, the switching pawl 71 falls into a notch 73 in the reel 53. Because of this the command shaft 63 rotates through which the blocking pawl 69 engages a large gear wheel 75 fastened to the main shaft 45 and in this way blocks the main shaft 45 to prevent it from rotating. Furthermore, the vanes 65 and 67 rotate as a result of which they move the coupling sleeves 57 and 59 outwards uncoupling the main shaft 45 from the winding drums. Moving the coupling sleeves 57 and 59 takes place because each of the vanes is provided with a face which is at an angle of, for example, 75 degrees to the main shaft. This face is situated in an external groove in the coupling sleeve's periphery. Through rotation of the vane, the vane's tip moves in the groove, where the bevelled side is turned against a wall of the groove in the coupling sleeve, as a result of which the sleeve is moved in an axial direction.

Moreover, the command mechanism 61 has a means for rotating the command shaft 63 in the opposite direction, so that the winding drums 33 and 35 can be coupled to the main shaft 45 and the main shaft can be blocked. This means has not been shown for the sake of clarity, but is made up of a cord that passes from below through the hole 77 in the blocking pawl 69, is turned downwards and fastened to the blocking pawl 69 at point 79. Therefore, by pulling on the cord the winding drums 33 and 35 are coupled first to the main shaft 45 and then the blocking of the main shaft 45 is released, after which the main spring 49 together with the winding springs 41 and 43 rotate the winding drums 33 and 35.

The transmission 47 has a different transmission ratio in the two opposite directions of rotation. The large gear wheel 75 fastened to the main shaft 45 is part of the transmission 47. Moreover, the transmission 47 has a first and a second small gear wheel 81 and 83, which gear wheels mesh with the large gear wheel 75 and have a different number of teeth. The first and second small gear wheels 81, 83 are on a first and second auxiliary shaft 85, 87. Furthermore, there is an additional small gear wheel 89, 91, which mesh with each other, on each auxiliary shaft. Gear wheel 81 can rotate freely in one direction of rotation on the auxiliary shaft 85 and is blocked in the opposite direction of rotation with respect to the auxiliary shaft 85. Gear wheel 89 can rotate freely in this last direction of rotation on the auxiliary shaft 85 and is blocked in the direction of rotation mentioned first with respect to the auxiliary shaft 85.

The lifting mechanism has further two rotation dampers 93 and 95 which are coupled to the winding drums 33 and 35 by means of belts 97 and 99.

The lifting mechanism works as follows. In the position when starting, the cables are wound on the winding drums 33 and 35 and the main shaft 45 is uncoupled from the winding drums 33 and 35 and to prevent it from rotating blocked by the blocking pawl 69. In this position the main spring 49 is under tension and there is no bicycle on the cables. In order to attach a bicycle to the cables, they are pulled downwards, through which they unwind from the winding drums 33 and 35 and the winding springs 41, 43 are put under tension.

After attaching a bicycle to the cables, the command shaft 63 is rotated by pulling on the cord, which is fastened to the blocking pawl 69 at point 79. By rotating the command shaft 63, first of all the coupling sleeves 57 and 59 are pushed outwards, through which the main shaft 45 is coupled to the winding drums 33 and 35. On rotating the command shaft 63 further the blocking pawl 69 disengages entirely from the gear wheel 75, releasing the main shaft 45. The main spring 49 will now, through the transmission 47 and the main shaft 45, support the winding springs 41 and 43 in winding the cables and lifting the load.

When removing a bicycle, it is pulled down, as a result of which the main spring 49 is put under tension again, that is to say the band 51 is wound on the reel 55. When the band 51 is fully wound on the reel 55, the switching pawl 71 will fall into the notch 73 (because the command shaft 63 is constantly under a spring load) and rotate the command shaft 63. With this the main shaft 45 is blocked to prevent it from rotating and then uncoupled from the winding drums 33 and 35.

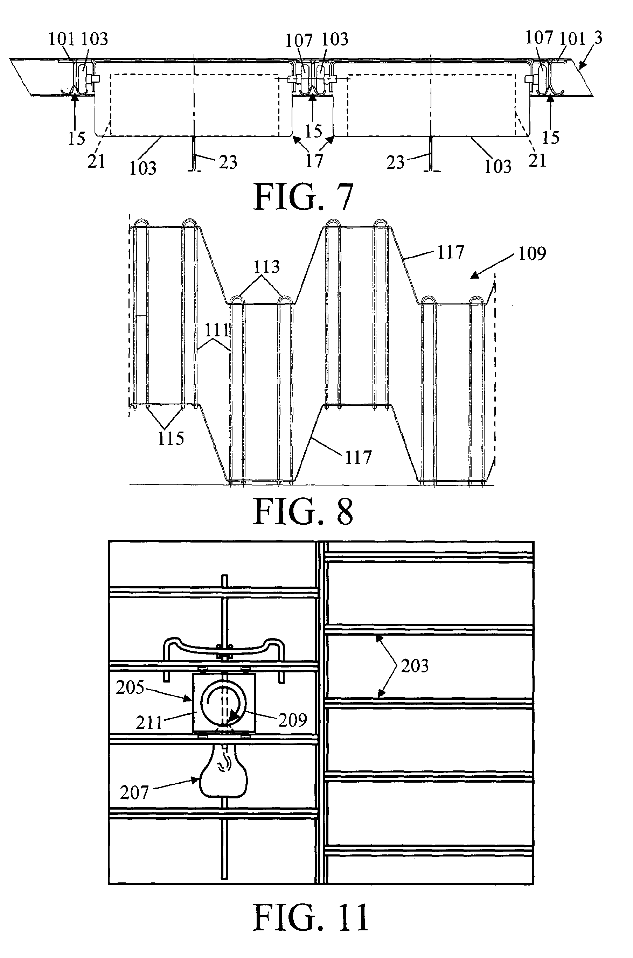

A cross-section of a detail of the means of guiding 15 with the units 17 which can move along the means of guiding is shown in Figure 7. The means of guiding 15 has rail elements 101 between which there is a conveyance element 103. The conveyance element 103 has two guide wheels 105 and 107 on both sides which are guided in the rail elements 101. The rail elements 101 consist of two rail sections fastened to each other, each of which guides a conveyance element 103.

In Figure 8 a part of the structural frame of a bicycle rack 109 is shown. The bicycle rack 109 is situated on the lowermost level between two rows of bicycles. The bicycles are pushed into the bicycle rack 109 with the front wheels first. The bicycle rack 109 has vertical slots formed by U-shaped bars 111. Both legs of the U-shape 113 pass through holes in the constructional elements 117 near the U-curve and near their free ends 115. The bars 111 have been pinched flat near the free ends 115, as a result of which the cross-sections of the bars 111 have a greater dimension than those of the holes in the constructional elements 117. In this way, the bars 111 are prevented from coming out of the constructional elements 117.

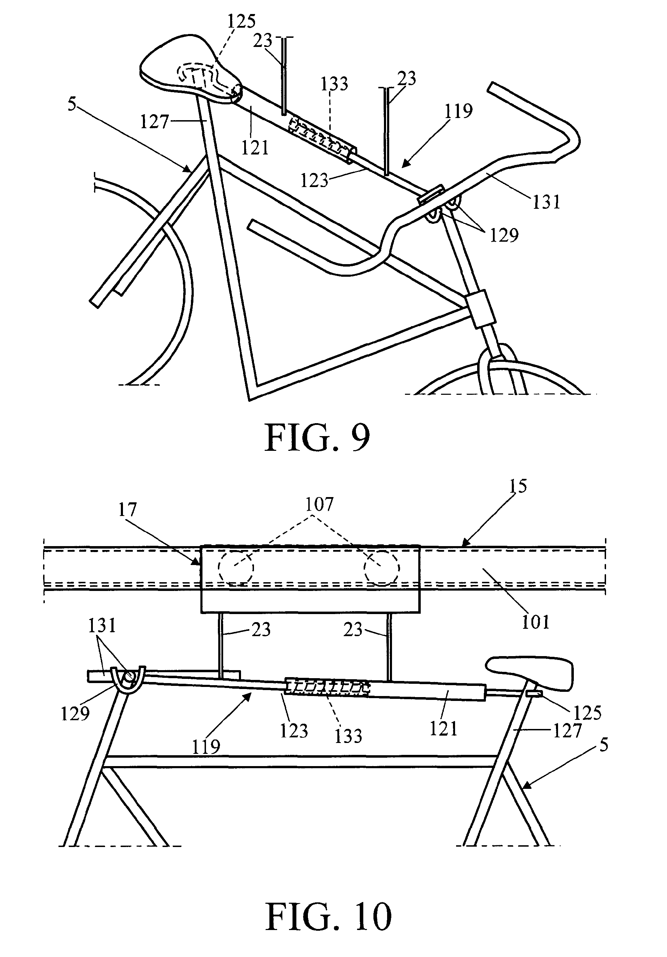

A bicycle 5 is shown in Figures 9 and 10 that is hanging on the cables 23 by means of an attaching device 119. The cables 23 are situated approximately 25 cm apart from each other as a result of which they can easily be twisted 90 degrees in order to turn the bicycle. The attaching device 119 has two elements 121 and 123 which can move telescopically with respect to each other in opposition to a spring. The outer element 121 is formed by a tube with a hook 125 at the end which can be hooked behind the seat tube 127 of the bicycle 5. The inner element 123 is formed by a bar with two hooks 129 at the end, which can be hooked onto the handlebars 131 of the bicycle 5. Both elements 121, 123 are connected to each other by means of a compression spring 133 so that when the two elements 121, 123 are pulled apart the compression spring 133 is compressed and when attaching the device 119 to the bicycle 5 the hooks 125 and 129 are pulled against the seat tube 127 and the handlebars 131.

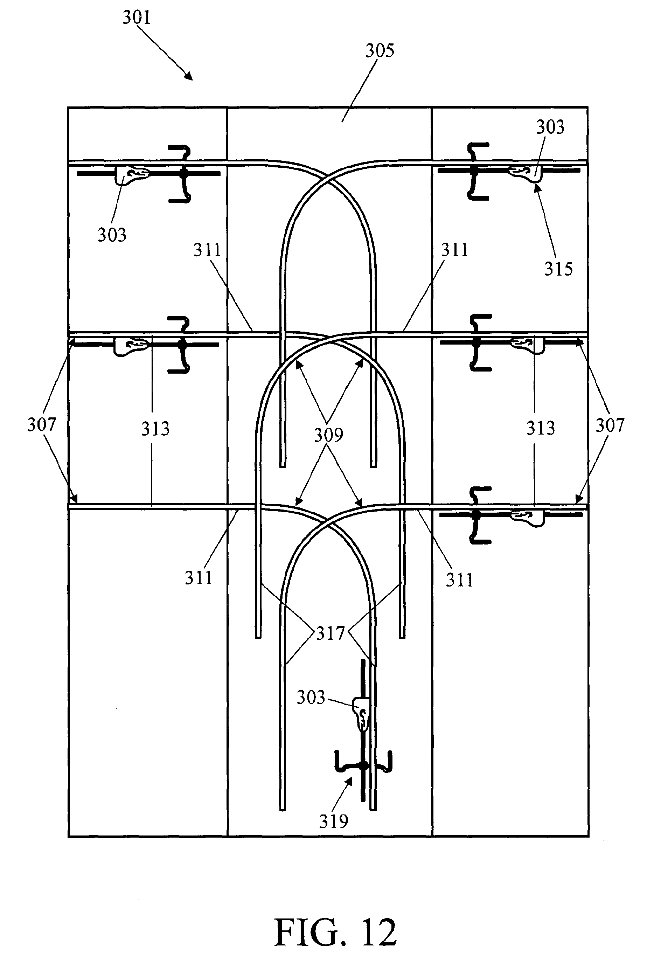

Figure 11 shows a second embodiment of the bicycle shed 201 according to the invention in a view from above. In this drawing a part of the means of guiding 203 is shown with a unit 205 which can move along the means of guiding on which a bicycle 207 is hanging which can be turned. The means of hanging comprises a platform 209 which can turn and is mounted on bearings in a guide element 211. The platform 209 can turn when in or on the way to the storage position with respect to the guide element 211 The cables are wound and unwound by the lifting mechanism described above which is situated in the platform 209 and forms a part of the means of hanging. The lifting mechanism's main spring exerts a force on the bicycle 207 which works in the direction opposite to the force exerted by the bicycle's weight. Because of this little force is needed to move the bicycle up and down.

Figure 12 shows a third embodiment of the bicycle shed 301 according to the invention. In this embodiment the elements for hanging cannot turn with respect to the conveyance element. In order to get the bicycle 303 into the removal position in the longitudinal direction of the corridor 305, the means of guiding 307 has a curve 309. The rail elements 311 have a first part 313 which extends above the storage position 315 of the bicycle 303 and a second part 317 which extends above the removal position 319 of the bicycle 303. The rail elements 311 are curved between the first and second parts 313 and 317 respectively.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Method for storing and removing goods, particularly bicycles, in a storage system in which the goods when in the storage position are in at least one row next to each other and are hung at a distance above a floor on a means of hanging and in which the goods in the placement and removal position are practically on the floor outside the row, in which when put in storage the goods are attached to the means of hanging outside the row, after which the goods are raised and moved into the row, and in which when being removed, the goods are moved from the storage position to outside the row and lowered practically to the floor, after which the goods are detached from the means of hanging, **characterized in that** when being put in storage the goods are placed in the placement position, in which the position of the goods is practically perpendicular to the position in the storage position, and that after attaching the goods to the means of hanging and before reaching the storage position, the goods are turned on an imaginary vertical axis from the position in the placement position to a position parallel to the position of the goods in the storage position, and that when removing the goods before detaching them from the means of hanging and after moving the goods from the storage position, the goods are turned on an imaginary vertical axis from a position parallel to the position of the goods in the storage position to the removal position, which is practically perpendicular to the position of the goods in the storage position

2. Method according to claim 1, **characterized in that** turning the goods takes place by providing the means of hanging on which the goods are hung with at least two cables and by twisting these cables.

3. Method according to claim 1, **characterized in that** turning the goods takes place by moving the goods along a curved rail.

4. Method according to claim 1, **characterized in that** turning the goods takes place by turning the means of hanging on an imaginary vertical axis.

5. Storage system for hanging goods, particularly bicycles, for application to the method according to claim 2, comprising a means of guiding and a unit which can move along the means of guiding, comprising a conveyance element to be guided along the means of guiding, a means of hanging on which goods can be hung and a lifting mechanism for lifting and lowering the goods, which means of hanging comprises at least two elements for hanging at a distance from each other, for example cables, where the unit which can move along the means of guiding can be moved between the storage position and the removal position, **characterized in that** the distance between the elements for hanging is less than 50 cm.

6. Storage system according to claim 5, **characterized in that** the distance between the elements for hanging is practically equal to 25 cm.

7. Storage system for hanging goods, particularly bicycles, for application to the method according to claim 3, comprising a means of guiding and a unit which can move along the means of guiding, comprising a conveyance element to be guided along the means of guiding, a means of hanging on which the goods can be hung, and a lifting mechanism for lifting and lowering the goods where the unit which can move along the means of guiding can be moved between the storage position and the removal position, **characterized in that** the means of guiding comprises rail elements which extend from the storage position to the removal position, in which a first part of the rail elements extending above the storage position, is practically perpendicular to a second part of the rail elements extending above the removal position.

8. Storage system for hanging goods, particularly bicycles, for application to the method according to claim 4, comprising a means of guiding and a unit which can move along the means of guiding, comprising a conveyance element to be guided along the means of guiding, a means of hanging on which the goods can be hung, and a lifting mechanism for lifting and lowering the goods where the unit which can move along the means of guiding can be moved between the storage position and the removal position, **characterized in that** the means of hanging in the removal position and/or between the removal position and the storage position can be turned with respect to the conveyance element.

9. Storage system according to one of the preceding claims 5 to 8 inclusive, **characterized in that** the means of guiding comprises rail elements, in which there is a conveyance element between two rail elements and is guided on both sides by these rail elements and in which a number of rail elements guide a conveyance element on both sides.

10. Storage system according to one of the preceding claims 5 to 9 inclusive, **characterized in that** the storage system is a bicycle shed and that on the element for hanging there is an attaching device for attaching on a bicycle, which attaching device comprises two elements which can move with respect to each other and against a force, a spring, for example, each of which is provided with an attaching element at its free end for attaching to a part of a bicycle.

11. Storage system according to one of the preceding claims 5 to 10 inclusive, **characterized in that** the storage system has a safety mechanism which brakes the winding of the element for hanging, when there is no weight on this element.

12. Storage system according to claims 10 and 11, **characterized in that** the safety mechanism comprises a means of detection for detecting goods on the element for hanging, which means is situated in the attaching device and when the elements are slid apart winding of the element for hanging is released and when slid together the winding force is restricted.

13. Storage system according to one of the preceding claims 5 to 12 inclusive, **characterized in that** the storage system is a bicycle shed and comprises vertical slots for inserting a bicycle wheel, these slots being formed by two parallel bars the ends of which pass through holes in connecting elements, which bars have been pinched flat at or near at least one of the free ends in such a way that the dimension of the flattened part's cross-section is greater than that of the holes in the constructional elements

14. Storage system according to claim 13, **characterized in that** the two parallel bars are part of one U-shaped bar.

15. Storage system according to one of the preceding claims 5 to 13 inclusive, **characterized in that** the storage system is a bicycle shed, in which the goods are bicycles which are next to each other in rows and on at least two levels one above the other in the storage system, in which between a number of rows there are corridors, in which the means of guiding is fitted above in the structural frame and the goods are hung on units which move along the means of guiding on the highest level, and in which when in the removal position the goods are in the corridors.

16. Lifting mechanism for application to the storage system according to one of the preceding claims 5 to 15 inclusive, **characterized in that** the lifting mechanism comprises at least one winding drum for winding and unwinding an element for hanging, for example a cable, which winding drum can rotate freely on a fixed shaft, which lifting mechanism further comprises a least one winding spring, one end of which is fastened to the winding drum and the other end of which is fastened to the fixed shaft, which lifting mechanism further comprises a rotating main shaft which is coupled to a main spring, which main shaft can be coupled to the winding drum and can be blocked to prevent it from rotating, and which lifting mechanism further comprises a command mechanism for coupling and uncoupling the winding drum to the main shaft and for blocking and releasing the main shaft

17. Lifting mechanism according to claim 16, **characterized in that** the lifting mechanism comprises two winding drums for winding and unwinding two elements for hanging, each of which can rotate on a separate fixed shaft.

18. Lifting mechanism according to claim 16 or 17, **characterized in that** the main shaft is coupled to the main spring by means of a transmission, which transmission has a different transmission ratio in the two opposite directions of rotation.

19. Lifting mechanism according to claim 18, **characterized in that** the transmission comprises a large gear wheel fixed to the main shaft as well as a first and second small gear wheel which mesh with the large gear wheel and which have a different number of teeth, which first and second gear wheel are situated on a first and second auxiliary shaft, in which there is an additional small gear wheel on each auxiliary shaft, which additional small gear wheels mesh with each other, in which the main spring at one end is fastened to one of the auxiliary shafts, and in which one of the small gear wheels mentioned above can rotate freely in one direction of rotation with respect to the auxiliary shaft concerned and is blocked in the opposite direction of rotation with respect to the auxiliary shaft concerned and an additional small gear wheel of the small gear wheels mentioned above is blocked in the direction of rotation mentioned with respect to the auxiliary shaft concerned and can rotate freely in the opposite direction of rotation with respect to the auxiliary shaft concerned

20. Lifting mechanism according to one of the preceding claims 16 to 19 inclusive, **characterized in that** the lifting mechanism comprises at least one rotation damper coupled to the winding drum.

21. Lifting mechanism according to one of the preceding claims 16 to 20 inclusive, **characterized in that** the command mechanism comprises a command shaft on which two vanes are fastened as well as a blocking pawl and a switching pawl, which switching pawl falls into a notch when the main spring is wound up and the command shaft rotates, in which first the blocking pawl blocks the large gear wheel to prevent it from rotating and then the vanes uncouple the winding drums from the main shaft, and which command mechanism further comprises a means for rotating the command shaft in the opposite direction, in which first the winding drums are coupled to the main shaft and after that the main shaft is released

22. Lifting mechanism according to claim 21, **characterized in that** the above-mentioned means for rotating the command shaft is blocked if the telescopic elements of the storage system's attaching device with respect to each other have slid inwards maximally, indicating that no load is attached to the attaching device.
